# EUROPÄISCHE PATENTSCHRIFT

(11) **EP 3 349 928 B1**
(45) Veröffentlichungstag und Bekanntmachung des Hinweises auf die Patenterteilung: **08.07.2020**
(21) Anmeldenummer: 16805352.8
(22) Anmeldetag: 25.11.2016
(51) Int. Cl.: B22F 3/105, B29C 64/153, B29C 64/40, B22F 5/00, B33Y 10/00, B33Y 30/00, B29C 64/20, B22F 5/04

(54) **VERFAHREN UND EINRICHTUNG ZUR ADDITIVEN HERSTELLUNG**
METHOD AND APPARATUS FOR ADDITIVE MANUFACTURING
PROCÉDÉ ET DISPOSITIF DE FABRICATION ADDITIVE

(30) Priorität: 17.12.2015 DE 102015225652
(43) Veröffentlichungstag der Anmeldung: 25.07.2018
(73) Patentinhaber: Siemens Aktiengesellschaft, 80333 München (DE)
(72) Erfinder: HABERLAND, Christoph, 44789 Bochum (DE); KREUTZER, Andreas, 12621 Berlin - Hellersdorf (DE); LAMMERS, Heiko, 10789 Berlin (DE); LORENZ, Thomas, 14193 Berlin (DE); REGENER, Martin, 14169 Berlin (DE); SPERLICH, Kathrin, 10555 Berlin (DE); TOMUSCHAT, Danny, 14469 Potsdam (DE)
(86) Internationale Anmeldenummer: PCT/EP2016/078840
(87) Internationale Veröffentlichungsnummer: WO 2017/102286

(56) Entgegenhaltungen:
- CA-A1- 2 825 648
- DE-A1-102013 212 620
- DE-A1-102013 214 485

## Beschreibung

Die vorliegende Erfindung betrifft ein Verfahren zur additiven Herstellung sowie eine Einrichtung zur additiven Herstellung des Bauteils.

Die additive oder generative Fertigung von Werkstücken erfolgt meistens durch einen Urformprozess, beispielsweise mittels pulverbettbasierten Verfahren. Bekannte Verfahren sind insbesondere das selektive Laserschmelzen (SLM: englisch für "selective laser melting"), selektive Lasersintern (SLS: englisch für "selective laser sintering") und das Elektronenstrahlschmelzen (EBM: englisch für "elektron beam melting"). Bei den genannten Verfahren wird das Bauteil lagenweise in einem Pulverbett durch Aufschmelzen von das Pulverbett bildenden Partikeln mit einem Energiestrahl wie z. B. einem Elektronenstrahl oder einem Laserstrahl aufgebaut.

Ein Verfahren der eingangs angegebenen Art ist beispielsweise aus der EP 1 355 760 B1 bekannt.

Eine Vorrichtung und ein Verfahren zum Herstellen eines Bauteils in Schichtbauweise sind beispielsweise weiterhin bekannt aus DE 10 2013 214 485 A1.

Weiterhin ist eine Vorrichtung zum Sintern und Schmelzen, umfassend ein Mittel zum Erwärmen eines Pulvers durch Induktion, bekannt aus CA 2825648 A1.

Additive Herstellungsverfahren werden durch ihr iteratives Auf- oder Aneinanderfügen von Schicht- oder Volumenelementen zur Herstellung dreidimensionaler Gegenstände eingesetzt, und finden ihre Anwendung im Bereich der Herstellung von Prototypen sowie inzwischen auch in der Bauteilherstellung, insbesondere bei der Anfertigung individuell geformter Bauteile. Als Ausgangsmaterialien stehen eine Vielzahl unterschiedlicher Werkstoffe zur Verfügung, die sowohl in Pulver- oder Granulatform, aber auch in Form von Fluiden bspw. als Suspensionen, vorliegen können. Bei additiven oder generativen Herstellungsverfahren, wird der dreidimensionale Gegenstand durch eine Vielzahl einzelner Materialschichten gebildet, die auf einer absenkbaren Bauteilplattform nacheinander abgeschieden und anschließend einzeln einem lokal selektiven Verfestigungsprozess unterzogen werden.

Beim SLM-Prozess wird die beispielsweise durch einen Laser eingebrachte Wärme lediglich über das Bauteil, gegebenenfalls über Stützstrukturen und über die Bodenplatte oder Bauteilplattform abgeführt. Das umgebende Pulverbett hat im Vergleich dazu eine wesentlich geringere Wärmeleitfähigkeit und kann nahezu als thermisch isolierend angesehen werden. Dies kann insbesondere bei überhängenden Strukturen des Bauteils lokal zu hohen Temperaturen und damit zur Schädigung des Bauteils oder sogar der Herstellungsanlage oder -einrichtung führen. Im schlimmsten Fall könnte es beispielsweise zu Verspannungen und/oder Kollisionen mit einer Beschichtungseinrichtung der Anlage kommen.

Bisher kann beispielsweise die Materialqualität von durch Gussverfahren hergestellten Bauteilen, insbesondere in der Herstellung von Turbinenschaufeln, durch additive Verfahren noch nicht erreicht werden. Insbesondere ist die Struktur additiv hergestellter Bauteile hinsichtlich von Verspannungen, Korngrößen und/oder Strukturdefekten ungünstig gegenüber Strukturen, welche durch Gießen, ein Kristallziehverfahren oder ein anderes Verfahren zur gerichteten Erstarrung hergestellt oder herstellbar sind.

Derzeit werden heiße additive Verfahren mit Arbeitstemperaturen von über 1000 °C entwickelt, durch die beispielsweise ein für die Materialstruktur des Bauteils problematisches, schnelles Abkühlen der Metallschmelze verhindert und somit eine mit einem Gussverfahren qualitativ vergleichbare Mikrostruktur erzielt werden kann.

Es ist daher die Aufgabe der vorliegenden Erfindung, Mittel anzugeben, mit welchen Eigenschaften zumindest eines Teils des herzustellenden Bauteils beispielsweise hinsichtlich der Mikrostruktur positiv beeinflusst oder verbessert werden können.

Diese Aufgabe wird durch den Gegenstand der unabhängigen Ansprüche gelöst. Vorteilhafte Ausgestaltungen sind Gegenstand der abhängigen Patentansprüche.

Ein Aspekt der vorliegenden Erfindung betrifft ein Verfahren zur additiven Herstellung eines Bauteils, umfassend das additive Aufbauen eines Bauteils auf einer Bauteilplattform mit einer verschließbaren Öffnung. Die Öffnung wird von einem Verschluss verschlossen. Während eines ersten Teils des additiven Aufbaus oder Aufbauens des Bauteils, also quasi "in situ", wird eine Hilfsstruktur um die Öffnung der Bauteilplattform additiv hergestellt. Vorzugsweise wird die Hilfsstruktur vollständig oder vollumfänglich um die Öffnung der Bauteilplattform herum hergestellt.

Die Hilfsstruktur wird vorzugsweise weiterhin direkt oder in geringem Abstand neben dem additiv herzustellenden Bauteil aufgebaut. Der Herstellungsprozess der Hilfsstruktur ist vorzugsweise ein und derselbe, sodass die Hilfsstruktur aus dem gleichen Material wie das Bauteil aufgebaut wird.

Das Verfahren umfasst weiterhin das Einbringen einer Vorrichtung durch die Öffnung in eine von der Hilfsstruktur definierte Kavität. Bei der Kavität kann es sich um einen Hohlraum handeln.

Das Verfahren umfasst weiterhin das Beeinflussen und/oder Erfassen, insbesondere Messen, von Eigenschaften des herzustellenden Bauteils durch die Vorrichtung während eines zweiten, sich an den ersten Teil des additiven Aufbaus anschließenden, Teil des additiven Aufbaus.

Bei der genannten Beeinflussung kann es sich beispielsweise um ein Erwärmen bzw. Heizen oder um Kühlen oder eine Kühlung des herzustellenden Bauteils handeln.

Das genannte Erfassen bezieht sich vorzugsweise auf ein Messverfahren, beispielsweise zur Messung der Temperatur oder zur Messung von Schwingungen des Bauteils.

Die genannten Eigenschaften können sich auf das herzustellende Bauteil oder nur auf einen von der Bauteilplattform beabstandet angeordneten oder beabstandet herzustellenden oder hergestellten Abschnitt des Bauteils beziehen.

Der erste Teil des additiven Aufbaus des Bauteils bezieht sich vorzugsweise auf eine Aufbauphase des Bauteils, in der auch die Hilfsstruktur gleichzeitig mit aufgebaut wird.

Der zweite Teil des additiven Aufbaus bezieht sich vorzugsweise auf eine Aufbauphase des Bauteils in der die Hilfsstruktur bereits fertiggestellt oder aufgebaut wurde.

Durch das beschriebene Verfahren kann - mittels der Vorrichtung - und vorteilhafterweise während des Aufbaus, Einfluss auf den Zustand oder die Eigenschaften, beispielsweise die Mikrostruktur des herzustellenden Bauteils genommen werden.

Ein weiterer Aspekt der vorliegenden Erfindung betrifft eine Einrichtung zur additiven Herstellung eines Bauteils umfassend die Bauteilplattform mit der Öffnung und einen Verschluss. Der Verschluss ist ausgebildet, die Öffnung zu verschließen. Weiterhin ist die Bauteilplattform der Einrichtung relativ zu dem Verschluss absenkbar ausgebildet.

Die Einrichtung umfasst die beschriebene Vorrichtung, wobei die Öffnung und/oder die Vorrichtung derart ausgebildet sind, dass die Vorrichtung, beispielsweise von unten, durch die

Öffnung geschoben oder eingebracht werden kann, beispielsweise in einen Herstellungsraum der Einrichtung.

In einer Ausgestaltung ist oder umfasst die Vorrichtung ein Endoskop. Diese Ausgestaltung ist insbesondere vorteilhaft bei besonders kleinen additiv herzustellenden Bauteilen, welche nur wenig Platz für das Einbringen der Vorrichtung bieten. Zweckmäßigerweise ist die Öffnung dann dieser Ausgestaltung entsprechend dimensioniert.

In einer Ausgestaltung ist die Vorrichtung eine Messvorrichtung, beispielsweise zum Messen der Temperatur oder zur Schwingungsmessung.

In einer Ausgestaltung ist die Vorrichtung eine Temperaturmessvorrichtung zum Messen der Temperatur des Bauteils oder eines Abschnitts desselben. Demgemäß kann die Vorrichtung beispielsweise ein Thermoelement, ein Pyrometer oder weitere Sensoren umfassen.

In einer Ausgestaltung ist die Vorrichtung eine Schwingungsmessvorrichtung zur Messung von Schwingungen des Bauteils oder eines Abschnitts desselben. Demgemäß kann die Vorrichtung beispielsweise einen piezoelektrischen Sensor umfassen.

Die Vorrichtung ist oder umfasst erfindungsgemäß eine Heizvorrichtung und/oder eine Kühlvorrichtung zum Erwärmen bzw. Kühlen des Bauteils oder eines Abschnitts desselben.

Die Öffnung wird zu Beginn des additiven Aufbaus des Bauteils von einem Verschluss verschlossen. Vorzugsweise bildet der Verschluss in diesem Zustand zusammen mit der Bauteilplattform eine gemeinsame Aufbau- oder Herstellungsfläche. Bei dem Verschluss kann es sich um einen Verschlusskolben, einen Stopfen oder beispielsweise um einen Schieber handeln.

Die Bauteilplattform wird zumindest während des ersten Teils des additiven Aufbaus des Bauteils relativ zu dem Verschluss abgesenkt. Dadurch kann - im Falle eines pulverbettbasierten additiven Herstellungsverfahrens - die Kavität oder der Hohlraum innerhalb der Hilfsstruktur geschaffen werden, da der durch die Hilfsstruktur definierte Raum durch diese Ausgestaltung frei oder im Wesentlichen frei von Pulver gehalten werden kann.

Der Verschluss wird anschließend, d.h. nach dem ersten Teil des additiven Aufbaus des Bauteils oder nach der Fertigstellung der Hilfsstruktur, aus der Öffnung entfernt.

In einer Ausgestaltung wird das herzustellende Bauteil oder beispielsweise lediglich ein von der Bauteilplattform beabstandet (angeordnet) herzustellender Abschnitt des Bauteils während des zweiten Teils des additiven Aufbaus von der Vorrichtung erwärmt und/oder gekühlt.

Eine Erwärmung kann, wie oben bereits angedeutet, zweckmäßig sein, um ein schnelles Aus- oder Abkühlen des Bauteils zu verhindern und damit eine besonders vorteilhafte, beispielsweise defektarme oder für eine Anwendung des Bauteils günstigere Mikrostruktur des Bauteils auszubilden oder zu erreichen.

Hingegen kann ein Kühlen des herzustellenden Bauteils oder eines Abschnitts desselben vorteilhaft sein, um die Wärmeabfuhr des Laserstrahls und damit ein zweckmäßiges Erstarren des aufgeschmolzenen Pulvers zu ermöglichen und so ebenfalls die Herstellung zu optimieren.

In einer Ausgestaltung wird die Temperatur eines von der Bauteilplattform beabstandet angeordnet herzustellenden oder aufzubauenden Abschnitts des Bauteils oder des gesamten Bauteils von der Vorrichtung gemessen und durch Erwärmen oder Kühlen eingestellt. Demgemäß ist die Vorrichtung, wie oben angedeutet, vorzugsweise zur Temperaturmessung und erfindungsgemäß zu einer entsprechenden Regelung der Temperatur ausgebildet.

In einer Ausgestaltung wird das Bauteil während des additiven Aufbaus, beispielsweise des zweiten oder abschließenden Teils des Aufbaus, mit einem Überhang oder einer Hinterschneidung versehen. Gemäß dieser Ausgestaltung definiert der genannte Überhang vorzugsweise die Kavität an einer Oberseite. Die Oberseite bezeichnet vorzugsweise eine in Aufbaurichtung des Bauteils oben liegende Seite der Kavität und/oder der Hilfsstruktur. Gemäß dieser Ausgestaltung definiert die Hilfsstruktur vorzugsweise lediglich Seitenwände oder eine Mantelfläche der Kavität. Die Hilfsstruktur per se kann entsprechend an der Oberseite geöffnet sein und von dem überhängenden Abschnitt des Bauteils geschlossen sein oder werden. Mit anderen Worten kann, beispielsweise in einer Aufsicht auf die Bauteilplattform betrachtet, der Überhang oder ein überhängender oder vorstehender Abschnitt des additiv herzustellenden Bauteils die Öffnung übertragen.

In einer Ausgestaltung wird das herzustellende Bauteil derart additiv aufgebaut, dass das Bauteil ein Aspektverhältnis, vorzugsweise relativ zu einer Aufbaurichtung des Bauteils, von mindestens 2:1 aufweist. Das Aspektverhältnis beschreibt das Verhältnis einer Höhe oder Tiefe des herzustellenden Bauteils in Aufbaurichtung, bezogen auf eine lateralen Abmessung, beispielsweise einer Abmessung parallel zu einer Oberfläche der Bauteilplattform. Gemäß dieser Ausgestaltung ist die Hilfsstruktur vorzugsweise bereits mit einer geschlossenen Oberseite hergestellt worden und wird nicht zwingend von einem überhängenden Abschnitt des Bauteils geschlossen.

In einer Ausgestaltung wird das herzustellende Bauteil zumindest teilweise durch die Hilfsstruktur gebildet. Das herzustellende Bauteil kann ebenfalls komplett durch die Hilfsstruktur gebildet sein oder werden. Diese Ausgestaltung bezieht sich auf ein herzustellendes oder additiv aufzubauendes Bauteil, welches per se, d.h. seiner vordefinierten Form schuldend, eine hohle Struktur oder eine Kavität aufweist.

Durch die entsprechende Ausgestaltung der Einrichtung und/oder der Bauteilplattform kann dann eben diese hohle Geometrie oder Kavität genutzt werden, um mittels der Vorrichtung beispielsweise Eigenschaften des Bauteils wie oben beschrieben, zu beeinflussen oder zu erfassen.

In einer Ausgestaltung ist oder umfasst das Verfahren ein pulverbettbasiertes Herstellungsverfahren, beispielsweise ein Verfahren zum selektiven Laserschmelzen oder Elektronenstrahlschmelzen.

Bei einem gemäß des vorliegenden erfindungsmäßigen Verfahrens hergestellten Bauteil kann einerseits durch die lokale Beheizung der Temperaturgradient bei der Abkühlung des Bauteils herabgesetzt und anderseits durch die lokale Heiz- und/oder Kühlvorrichtung ein gleichförmiges Temperaturprofil im Bauteil erzeugt werden. Das Bauteil umfasst weiterhin eine im Vergleich zu einem konventionell additiv herzustellenden Bauteil reduzierte Dichte von Strukturdefekten, Fehlstellen und/oder Korngrenzen sowie vorzugsweise reduzierte Eigenspannungen und dementsprechend reduzierte Verzugserscheinungen und Anbindungsfehler, insbesondere zwischen der Bauteilplattform und dem Bauteil.

Ausgestaltungen und/oder Vorteile, die sich vorliegend auf das Verfahren zur additiven Herstellung beziehen, können sich ebenso auf die Einrichtung beziehen und umgekehrt.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Die Figuren 1 bis 7 zeigen jeweils eine vereinfachte, schematische Schnittansicht einer Einrichtung zur additiven Herstellung eines Bauteils.
Die Figuren 1 bis 6 beschreiben insbesondere verschiedene Verfahrensschritte eines Verfahrens zur additiven Herstellung eines Bauteils gemäß einer ersten Ausführungsform.
Figur 7 deutet einen Teil eines Verfahrens zur additiven Herstellung eines Bauteils gemäß einer zu den Figuren 5 und 6 alternativen Ausführungsform an.

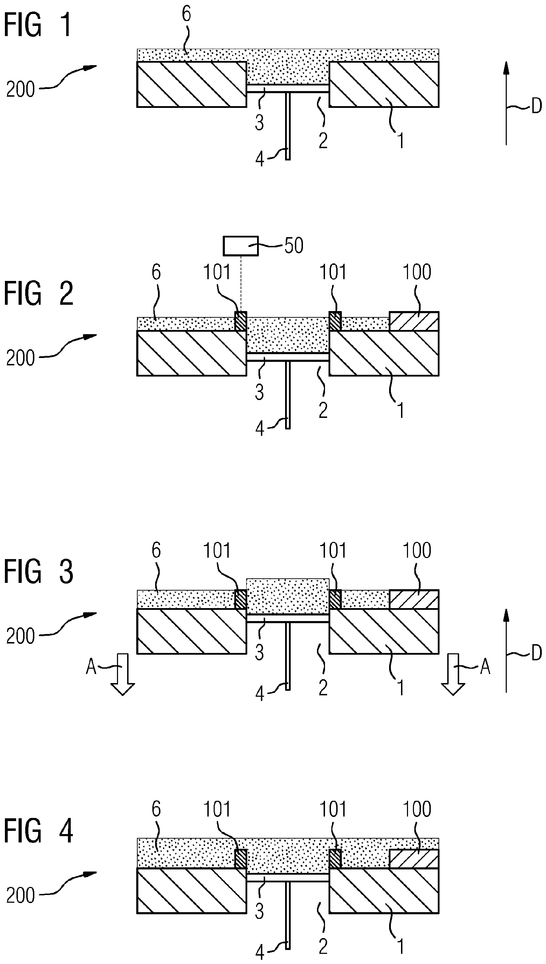

Figur 1 zeigt schematisch zumindest einen Teil einer Einrichtung 200 zur additiven Herstellung eines Bauteils 100 (vergleiche Figuren 2 bis 7). Bei dem Bauteil 100 handelt es sich vorzugsweise um ein Bauteil mit einer komplexen Struktur oder Kontur oder um ein längliches und/oder gebogenes Bauteil.

Die Einrichtung 200 ist vorzugsweise eine Einrichtung oder Anlage für ein additives, beispielsweise pulverbettbasiertes Herstellungsverfahren, wie ein Verfahren zum selektiven Laserschmelzen (SLM) und/oder Elektronenstrahlschmelzen (EBM).

Die Einrichtung 200 umfasst eine Bauteilplattform 1. Die Bauteilplattform 1 kann ein Substrat sein, auf dem ein Werkstück oder Bauteil im Rahmen der additiven Herstellung schichtweise aufgebaut wird. Üblicherweise ist die Bauteilplattform in gängigen entsprechenden Einrichtungen vorzugsweise relativ zu weiteren Komponenten der Einrichtung, beispielsweise einer Belichtung- oder Lasereinrichtung absenkbar. Die Bauteilplattform 1 weist eine Öffnung 2 auf. Die Öffnung 2 ist exemplarisch zentral in der Bauteilplattform 1 angeordnet. In Aufsicht auf die Bauteilplattform 1 betrachtet kann die Öffnung eine Vielzahl von Formen haben, beispielsweise quadratisch oder rechteckig, vorzugsweise jedoch kreisförmig ausgebildet sein.

In der Öffnung 2 ist ein Verschluss 3 angeordnet. Der Verschluss 3 ist vorzugsweise ausgebildet, die Öffnung 2 passgenau oder pulverdicht zu verschließen. Der Verschluss 3 umfasst beispielsweise einen Kolben (nicht explizit gekennzeichnet). Der Verschluss 3 umfasst weiterhin eine Kolbenstange 4, mit der der Verschluss 3 vorzugsweise vertikal oder entlang einer Aufbaurichtung (vergleiche Richtung D) verschoben werden kann. Der Verschluss kann weiterhin ein Kolben, ein Stecker, ein Verschlusskolben oder ein Schieber sein.

Weiterhin ist in Figur 1 Pulver 6 auf dem Verschluss 3 und der Bauteilplattform 1 gezeigt. Das Pulver ist vorzugsweise ein Metallpulver, welches im Rahmen eines SLM-Verfahrens zum Aufbau von Bauteilen herangezogen wird. Das Pulver wird dabei üblicherweise lagenweise oder Schicht-für-Schicht mit einem Schieber oder einer Rakel in einer bestimmten Schichtdicke auf der Bauteilplattform verteilt. In Figur 1 ist beispielsweise eine durchgehende Pulverschicht auf der Bauteilplattform 1 dargestellt, welche in einem ersten Verfestigungsschritt aufgebaut oder hergestellt werden kann. Alternativ zur Darstellung in Figur 1 kann der Verschluss entlang der Aufbaurichtung derart angeordnet sein, dass die Bauteilplattform 1 und der Verschluss 3 eine ebene Grundfläche für die Herstellung eines Bauteils bilden.

Der Raum oberhalb der Bauteilplattform 1 bezeichnet vorzugsweise einen Herstellungsraum (nicht explizit gekennzeichnet).

Figur 2 zeigt zusätzlich zur Figur 1 einen Laser 50 oder eine entsprechende Laservorrichtung, mit welcher Pulver auf der Bauteilplattform 1 und/oder dem Verschluss 3 punktuell und schichtweise zunächst aufgeschmolzen und anschließend für das entsprechend herzustellende Bauteil verfestigt werden kann. In der entsprechenden Darstellung ist der Laser 50 oder Laserstrahl aktuell zu deren Herstellung auf eine Hilfsstruktur 101 ausgerichtet oder fokussiert. Die Hilfsstruktur 101 wird vorzugsweise um die Öffnung 2 herum additiv aufgebaut.

Schichtweise nacheinander wird - simultan mit der Hilfsstruktur 101 - ein Bauteil 100 (vergleiche rechter Rand der Figur 2), vorzugsweise durch dasselbe Verfahren, hergestellt. Entsprechend werden die Hilfsstruktur 101 und das Bauteil 100 vorzugsweise aus demselben Material gefertigt. Bei dem Material kann es sich beispielsweise um das Basismaterial einer nickel- oder kobaltbasierten Superlegierung für die Herstellung von Bauteilen im Heißgaspfad einer Gasturbine handeln.

Das Bezugszeichen 100 beschreibt vorzugsweise das herzustellende Bauteil als auch das hergestellte oder teilweise hergestellte Bauteil 100 synonym.

Insbesondere ist in Figur 2 eine Situation beschrieben, in der sowohl die erste Schicht der Hilfsstruktur 101 als auch die erste Schicht des Bauteils 100 bereits durch den Laserstrahl exponiert und verfestigt wurde.

Figur 3 zeigt im Gegensatz zu Figur 2 eine Situation in der die Bauteilplattform 1 relativ zu dem Verschluss 3, beispielsweise um die Schichtdicke einer einzelnen Lage abgesenkt wurde. Dementsprechend umfasst die Einrichtung 200 eine Arretierung, wonach der Verschluss 3 nicht mit abgesenkt wird. Das Absenken ist durch die beiden mit A gekennzeichneten Pfeile an den Seiten der Bauteilplattform 1 angedeutet. Es ist ebenfalls zu erkennen, dass relativ zu der Situation in Figur 2 eine weitere Pulverlage bspw. im Rahmen eines herkömmlichen SLM Verfahrens aufgebracht wird oder wurde. Aufgrund der Tatsache, dass der Verschluss 3 nicht mit der Bauteilplattform 1 abgesenkt wurde kann sich, wie angedeutet, auf dem Verschluss 3 überschüssiges Pulver ansammeln, welches gegenüber dem auf der Bauteilplattform angeordneten Pulver überstehen kann.

Obwohl vorliegend lediglich auf ein SLM-Verfahren Bezug genommen wird, ist das erfinderische Konzept ebenso auf weitere Verfahren, bspw. EBM anwendbar.

Figur 4 deutet an, dass relativ zu der Darstellung in Figur 3 eine weitere Pulverlage beispielsweise mittels des beschriebenen Rakels oder einer Beschichtungseinrichtung aufgebracht und/oder glatt gestrichen wurde, die anschließend mit dem Laser 50 (vergleiche Figur 2) belichtet und verfestigt werden kann.

Zur Aufbau des individuell ausgestalteten Bauteils 100 können insbesondere die anhand der Figuren 2 bis 4 beschriebenen Verfahrensschritte sukzessive wiederholt werden.

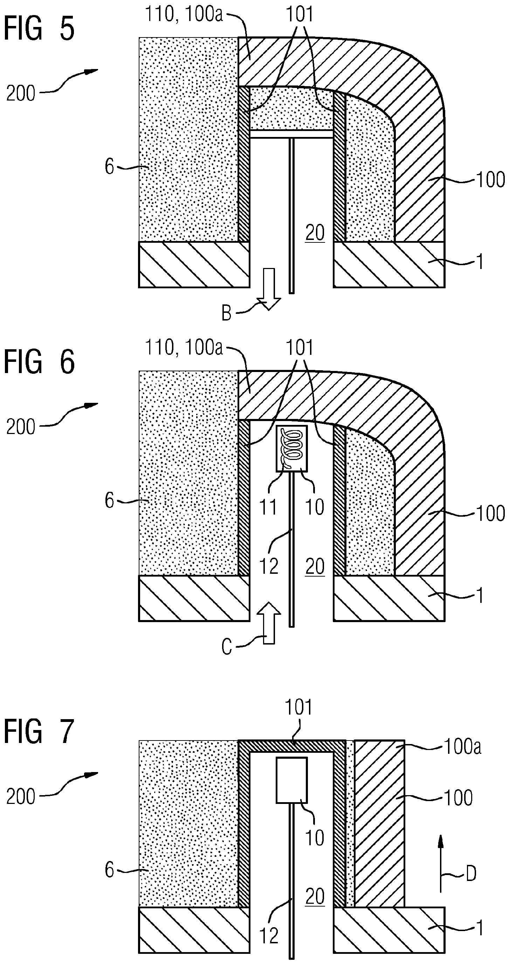

In der Darstellung der Figur 5 ist der additive Aufbau sowohl das Bauteil 100 als auch die Hilfsstruktur 101 bereits weit fortgeschritten oder abgeschlossen. Insbesondere ist zu erkennen, dass das Bauteil 100 einen von der Bauteilplattform 1 beabstandeten Abschnitt 100a und/oder einen Überhang 110 aufweist, welcher die Hilfsstruktur 101 an einer Oberseite überragt oder abschließt.

Dadurch, dass der Verschluss 3 relativ zu der Bauteilplattform 1 in jedem einzelnen Aufbauschritt (in dem jeweils eine Lage von Material in Pulverform aufgebracht und verfestigt wurde) nicht mit abgesenkt wurde, hat sich zumindest unter dem Kolben des Verschlusses eine Kavität 20 gebildet.

Der genannte Bereich 100a bzw. der Überhang 110 definiert entsprechend die Kavität 20 zumindest an einer Oberseite. Weiterhin wird die Kavität 20 beispielsweise an den Seiten- oder Mantelflächen von der Hilfsstruktur 101 definiert oder abgegrenzt.

Es ist weiterhin zu erkennen in Figur 5, dass Bereiche in dem Herstellungsraum, in denen beispielsweise kein Material verfestigt wurde, mit Pulver 6 gefüllt sind.

Als weitere Verfahrensschritte des beschriebenen Verfahrens zur additiven Herstellung ist durch den Pfeil B in Figur 5 angedeutet, dass der Verschluss 3, vorzugsweise nachdem die Kavität 20 vollständig definiert wurde, aus der Kavität 20 bzw. der Öffnung 2 entfernt wurde. Dies geschieht vorzugsweise samt des auf dem Kolben des Verschlusses 3 verbleibenden Pulvers.

Der Zeitraum bis zu dem die Kavität 20 beispielsweise seit Beginn des Aufbaus durch die Hilfsstruktur 101 und den Abschnitt 100a des Bauteils 100 definiert oder fertig gestellt ist, bezeichnet vorzugsweise einen ersten Teil des additiven Aufbaus des Bauteils 100.

Der Zeitpunkt ab dem die Kavität 20 beispielsweise durch die Hilfsstruktur 101 und den Abschnitt 100a des Bauteils 100 fertiggestellt ist und in dem das Bauteil 100 ohne den Aufbau der Hilfsstruktur 100 weiterhin aufgebaut wird, bezeichnet vorzugsweise einen zweiten Teil des additiven Aufbaus des Bauteils 100.

In Figur 6 ist angedeutet, dass der Verschluss 3 aus der Kavität 20 entfernt wurde und die Kavität 20 ebenfalls frei von Pulver ist. Durch den Pfeil C wird angedeutet, dass in die komplett hohle Kavität eine Vorrichtung 10 eingebracht wurde. Durch das bisher beschriebene Verfahren kann vorteilhafterweise erreicht werden, dass insbesondere durch den additiven Aufbau der Hilfsstruktur 101 eine Seite, ein Bereich oder Oberfläche des Bauteils 100 nun beispielsweise für eine Beeinflussung oder Erfassung von Eigenschaften des Bauteils 100 zugänglich gemacht wird.

Wenn vorliegend Bezug auf das Bauteil genommen wird, kann ebenfalls ein von der Bauteilplattform 1 beabstandeter Abschnitt 100a des Bauteils 100 und/oder der Überhang 110 oder überhängende Abschnitt bezeichnet sein, und umgekehrt.

Die Vorrichtung 10 kann beispielsweise eine Vorrichtung zum Messen von Schwingungen sein und entsprechend beispielweise einen piezoelektrischen Sensor umfassen.

Alternativ oder zusätzlich kann die Vorrichtung 10 eine Temperaturmessvorrichtung sein, und entsprechend ein Thermoelement oder ein Pyrometer zum Messen der Temperatur des Überhangs 110 umfassen. Zusätzlich umfasst die Vorrichtung 10 eine Heiz- und/oder eine Kühlvorrichtung. Weiterhin kann die Vorrichtung 10 eine Temperaturregelung umfassen, so dass das Bauteil 100 beispielsweise auf einer vorbestimmten Temperatur gehalten werden kann. Dies kann insbesondere für die Ausbildung einer besonders vorteilhaften Mikrostruktur des Bauteils 100 oder des entsprechenden Abschnitts desselben vorteilhaft sein.

Alternativ oder zusätzlich kann die Vorrichtung weitere Effekte hervorrufen.

In Figur 6 ist in der Vorrichtung 10 ein Heizwiderstand 11 gezeigt, durch welchen der Überhang 110 des Bauteils 100 beispielsweise beheizt oder erwärmt werden kann. Wie oben bereits angedeutet, kann durch eine solche Erwärmung ein schnelles Auskühlen und damit ein Ausbilden von Fehlstellen oder Rissen im Material des Bauteils verhindert oder eingeschränkt werden. Die Vorrichtung 10 kann weiterhin zum platzsparenden Einbringen in die Kavität 20 ein Endoskop 12 umfassen.

Gemäß der Darstellung in Figur 6 ist das Bauteil 100 vorzugsweise noch nicht vollständig aufgebaut und/oder hergestellt.

Sobald im Fortgang des Aufbaus die Kavität vollständig geschlossen oder durchgängig ausgebildet wurde, können vorzugsweise durch die Vorrichtung 10 Eigenschaften des Bauteils 100 zu Gunsten des gewünschten Bauteils oder seiner Struktur beeinflusst oder erfasst werden.

Figur 7 zeigt schematisch eine zu der bisherigen Beschreibung alternative Ausgestaltung des Verfahrens analog zu dem in Figur 6 angedeuteten Verfahrensstand. Im Unterschied zur Darstellung aus Figur 6 ist die Kavität 20 gemäß dieser Ausgestaltung vollständig durch die Hilfsstruktur 101 definiert oder abgegrenzt.

Mit anderen Worten handelt es sich bei dieser Ausgestaltung des Verfahrens um eine lediglich hilfsweise aufgebaute Oberseite der Hilfsstruktur 101.

Als Alternative zu pulverbett-basierten Verfahren kann ein additives Herstellungsverfahren für die vorliegende Erfindung zum Einsatz kommen, welches einen flüssigen Ausgangsstoff, bspw. anstatt eines pulverförmigen Ausgangsstoffs, benutzt.

Diese Ausgestaltung ist insbesondere zweckmäßig für die additive Herstellung von Bauteilen, welche durch die gewünschte Geometrievorgabe oder ihren Zweck keine wesentlichen Überhänge aufweisen. Die dargestellte Vorrichtung 10 kann entsprechend der Beschreibung zu Figur 6 ausgestaltet oder gewählt sein. Obgleich ist beispielsweise eine Temperaturmessung oder Erwärmung des Bauteils im Vergleich zu der Ausgestaltung aus Figur 6 nicht so effektiv, da die Vorrichtung 10 nur indirekt und nicht direkt physisch mit dem Bauteil 100 in Verbindung steht. Dennoch wird durch das beschriebene Verfahren ebenfalls ein besserer Zugang eines aktuell zu bearbeitenden Abschnitts des Bauteils ermöglicht, wodurch beispielsweise das Herstellungsverfahren vereinfacht und/oder die Mikrostruktur des Bauteils verbessert werden kann. Weiterhin ist diese Ausgestaltung vorzugsweise zweckmäßig bei Bauteilen, welche ein großes Aspektverhältnis, beispielsweise ein Aspektverhältnis von 2:1 oder größer aufweisen, da sich der erfinderische Vorteil des Verfahrens bzw. der beschriebenen Einrichtung 200 mit zunehmendem Abstand von der Bauteilplattform umso stärker auswirkt.

Eine weitere nicht explizit in den Figuren gekennzeichnete Ausführungsform des Verfahrens betrifft ein herzustellendes Bauteil, welches zumindest teilweise oder ganz durch die Hilfsstruktur gebildet wird. Gemäß dieser Ausgestaltung kann das additiv aufzubauende Bauteil, per se, d.h. aufgrund seiner vordefinierten Form, eine hohle Struktur oder eine Kavität aufweisen. Durch die entsprechende Ausgestaltung der Einrichtung und/oder der Bauteilplattform kann dann eben diese hohle Geometrie oder Kavität genutzt werden, um mittels der Vorrichtung Eigenschaften des Bauteils wie oben beschrieben zu beeinflussen oder zu erfassen.

## Patentansprüche

1. Verfahren zur additiven Herstellung eines Bauteils (100), welches die folgenden Schritte umfasst:
- Additives Aufbauen eines Bauteils (100) auf einer Bauteilplattform (1) mit einer Öffnung (2), wobei, während eines ersten Teils des additiven Aufbaus des Bauteils (100), eine Hilfsstruktur (101) um die Öffnung (2) der Bauteilplattform (1) additiv hergestellt wird, wobei die Öffnung (2) zu Beginn des additiven Aufbaus des Bauteils (100) von einem Verschluss (3) verschlossen wird, und
- Einbringen einer Vorrichtung (10) durch die Öffnung (2) in eine von der Hilfsstruktur (101) definierte Kavität (20), und
- Beeinflussen und/oder Erfassen von Eigenschaften des herzustellenden Bauteils (100) durch die Vorrichtung (10) während eines zweiten, sich an den ersten Teil des additiven Aufbaus anschließenden, Teils des additiven Aufbaus, wobei die Bauteilplattform (1) während des ersten Teils des additiven Aufbaus des Bauteils (100) relativ zu dem Verschluss (3) abgesenkt wird und der Verschluss (3) nach dem ersten Teil des additiven Aufbaus entfernt wird.

2. Verfahren gemäß Anspruch 1, wobei, das herzustellende Bauteil (100) während des zweiten Teils des additiven Aufbaus von der Vorrichtung (10), erwärmt oder gekühlt wird.

3. Verfahren gemäß Anspruch 1 oder 2, wobei die Temperatur eines von der Bauteilplattform (1) beabstandet herzustellenden Abschnitts (100a, 100b) von der Vorrichtung (10) gemessen und/oder durch Erwärmen oder Kühlen eingestellt wird.

4. Verfahren gemäß einem der vorhergehenden Ansprüche, wobei das Bauteil (100) während des additiven Aufbaus mit einem Überhang (110) versehen wird und wobei der Überhang (110) die Kavität (20) definiert.

5. Verfahren gemäß einem der vorhergehenden Ansprüche, wobei das herzustellende Bauteil (100) derart additiv aufgebaut wird, dass es ein Aspektverhältnis von mindestens 2:1 aufweist, wobei das Aspektverhältnis das Verhältnis einer Höhe oder Tiefe des herzustellenden Bauteils in Aufbaurichtung, bezogen auf eine lateralen Abmessung, beispielsweise einer Abmessung parallel zu einer Oberfläche der Bauteilplattform, beschreibt.

6. Verfahren gemäß einem der vorhergehenden Ansprüche, wobei das herzustellende Bauteil (100) zumindest teilweise durch die Hilfsstruktur (101) gebildet wird.

7. Verfahren gemäß einem der vorhergehenden Ansprüche, wobei das Verfahren ein pulverbettbasiertes Herstellungsverfahren ist, beispielsweise ein Verfahren zum selektiven Laserschmelzen.

8. Einrichtung (200) zur additiven Herstellung eines Bauteils (100) umfassend:
- eine Bauteilplattform (1) mit einer Öffnung (2),
- einen Verschluss (3), welcher ausgebildet ist, die Öffnung (2) zu verschließen, wobei die Bauteilplattform (1) relativ zu dem Verschluss (3) absenkbar ausgebildet ist,
- eine Vorrichtung (10), wobei die Öffnung (2) und/oder die Vorrichtung (10) derart ausgebildet sind, dass die Vorrichtung (10) durch die Öffnung (2) geschoben werden kann, und wobei die Vorrichtung eine Heiz- und/oder eine Kühlvorrichtung umfasst.

9. Einrichtung (200) gemäß Anspruch 8, wobei die Vorrichtung (10) ein Endoskop umfasst.

10. Einrichtung (200) gemäß Anspruch 8 oder 9, wobei die Vorrichtung (10) eine Messvorrichtung ist, beispielsweise zum Messen der Temperatur oder zur Schwingungsmessung.

## Claims

1. Method for the additive production of a component (100), said method comprising the following steps:
- additively constructing a component (100) on a component platform (1) having an opening (2), wherein during a first part of the additive construction of the component (100) an auxiliary structure (101) is additively produced around the opening (2) of the component platform (1), wherein the opening (2) at the beginning of the additive construction of the component (100) is closed by a closure (3); and
- introducing a device (10) through the opening (2) into a cavity (20) defined by the auxiliary structure (101); and
- influencing and/or detecting properties of the component (100) to be produced by the device (10) during a second part of the additive construction that is subsequent to the first part of the additive construction, wherein the component platform (1) during the first part of the additive construction of the component (100) is lowered relative to the closure (3), and the closure (3) is removed after the first part of the additive construction.

2. Method according to Claim 1, wherein the component (100) to be produced is heated or cooled by the device (10) during the second part of the additive construction.

3. Method according to Claim 1 or 2, wherein the temperature of a portion (100a, 100b) that is to be produced in a manner spaced apart from the component platform (1) is measured and/or set by heating or cooling by the device (10).

4. Method according to one of the preceding claims, wherein the component (100) during the additive construction is provided with a projection (110), and wherein the projection (110) defines the cavity (20).

5. Method according to one of the preceding claims, wherein the component (100) to be produced is additively constructed in such a manner that said component (100) has an aspect ratio of at least 2:1, wherein the aspect ratio describes the ratio of a height or depth in the direction of construction of the component to be produced in relation to a lateral dimension, for example a dimension parallel to a surface of the component platform.

6. Method according to one of the preceding claims, wherein the component (100) to be produced is at least in part formed by the auxiliary structure (101).

7. Method according to one of the preceding claims, wherein the method is a powder-bed based production method, for example a method for selective laser melting.

8. Apparatus (200) for the additive production of a component (100), comprising:
- a component platform (1) having an opening (2);
- a closure (3) which is configured for closing the opening (2), wherein the component platform (1) is configured so as to be capable of being lowered relative to the closure (3);
- a device (10), wherein the opening (2) and/or the device (10) are/is configured in such a manner that the device (10) can be pushed through the opening (2), and wherein the device comprises a heating device and/or a cooling device.

9. Apparatus (200) according to Claim 8, wherein the device (10) comprises an endoscope.

10. Apparatus (200) according to Claim 8 or 9, wherein the device (10) is a measuring device, for example for measuring the temperature or for measuring vibrations.

## Revendications

1. Procédé de fabrication additive d'une pièce (100), qui comprend les stades suivants :
- on érige additivement une pièce (100) sur une plateforme (1) pour pièce, ayant une ouverture (2), dans lequel, pendant une première partie de l'érection additive de la pièce (100), on fabrique additivement une structure (101) auxiliaire autour de l'ouverture (2) de la plateforme (1) pour pièce, l'ouverture (2) étant fermée par une fermeture (3) au début de l'érection additive de la pièce (100), et
- on introduit un système (10) par l'ouverture (2) dans une cavité (20) définie par la structure (101) auxiliaire, et
- on influence et/ou on relève des propriétés de la pièce (100) à fabriquer par le système (1) pendant une deuxième partie de l'érection additive faisant suite à la première partie de l'érection additive, la plateforme (1) pour pièce étant, pendant la première partie de l'érection additive de la pièce (100), abaissée par rapport à la fermeture (3) et la fermeture (3) étant éloignée après la première partie de l'érection additive.

2. Procédé suivant la revendication 1, dans lequel on chauffe et on refroidit, par le système (10), la pièce (100) à fabriquer pendant la deuxième partie de l'érection additive.

3. Procédé suivant la revendication 1 ou 2, dans lequel on mesure, par le système (10), la température d'une partie (100a, 100b) à fabriquer à distance de la plateforme (1) pour pièce et/ou on la règle par chauffage ou refroidissement.

4. Procédé suivant l'une des revendications précédentes, dans lequel on munit la pièce (100) d'un porte à faux (110) pendant l'érection additive et le porte à faux (110) définit la cavité (20).

5. Procédé suivant l'une des revendications précédentes, dans lequel on érige additivement la pièce (100) à fabriquer, de manière à avoir un rapport d'aspect d'au moins 2:1, le rapport d'aspect décrivant le rapport d'une hauteur ou d'une profondeur de la pièce à fabriquer dans la direction d'érection, rapportée à une dimension latérale, par exemple à une dimension parallèlement à une surface de la plateforme pour pièce.

6. Procédé suivant l'une des revendications précédentes, dans lequel on forme la pièce (100) à fabriquer, au moins en partie, par la structure (101) auxiliaire.

7. Procédé suivant l'une des revendications précédentes, dans lequel le procédé est un procédé de fabrication à base de lit de poudre, par exemple un procédé de fusion laser sélective.

8. Dispositif (200) de fabrication additive d'une pièce (100), comprenant :
- une plateforme (1) pour pièce ayant une ouverture (2),
- une fermeture (3), constituée pour fermer l'ouverture (2), la plateforme (1) pour pièce étant constituée de manière à pouvoir être abaissée par rapport à la fermeture (3),
- un système (10), l'ouverture (2) et/ou le système (10) étant constitué de manière à pouvoir déplacer le système (10) dans l'ouverture (2) et dans lequel le système comprend un système de chauffage et/ou de refroidissement.

9. Dispositif (200) suivant la revendication 8, dans lequel le système (10) comprend un endoscope.

10. Dispositif (200) suivant la revendication 8 ou 9, dans lequel le système (10) est un système de mesure, par exemple pour mesurer la température ou pour la mesure des vibrations.
